# EUROPEAN PATENT SPECIFICATION

(11) **EP 3 013 714 B1**
(45) Date of publication and mention of the grant of the patent: **30.08.2017**
(21) Application number: 14772457.9
(22) Date of filing: 26.06.2014
(51) Int. Cl.: B65G 13/12

(54) **ROLLER CONVEYOR**
ROLLENFÖRDERER
CONVOYEUR À ROULEAUX

(30) Priority: 29.06.2013 NL 2011070
(43) Date of publication of application: 04.05.2016
(73) Proprietor: Ack IP BV, 5281 PL Boxtel (NL)
(72) Inventor: TEULING, DEN, Adrianus Wilhelmus Marius, NL-5626 GG Eindhoven (NL)
(74) Representative: Verhees, Godefridus Josephus Maria
(86) International application number: PCT/NL2014/050424
(87) International publication number: WO 2014/209122

(56) References cited:
- EP-A1- 2 460 687
- FR-A1- 2 573 372
- JP-A- H08 143 121
- US-A1- 2003 017 037

## Description

### Field of the invention

The invention relates to a roller conveyor comprising a U-profile with shafts at a mutual distance from each other and fixed in the direction of transport, each of which bearing at least one roll, as well as a lifting mechanism which is present under the U-profile for the lifting of the shafts, which roller conveyor further comprises a further profile which is open at the top and in which the U-profile is present, said further profile has two side walls on which an upper plate is attached. The top plate forms a floor and acts as a shieling of the rollers from dirt, and is provided with holes for the passage of the rollers.

### State of the art

Such a roller conveyor is generally known. In the known roller conveyor the free edges of the U-profile stabbing upwards and on each shaft one roller is present, which is located between the side portions of the U-profile. Hereby, the U-profile with the shafts and rollers can be lifted in its entirety. This famous roller bar takes some height. FR 2 573 372 discloses a roller conveyor according to the preamble of claim 1.

### Summary of the Invention

An object of the invention is to provide a roller conveyor of the type described in the preamble with a smaller overall height than the well-known roller conveyor. For this purpose, the roller conveyor according to the invention is configured as claimed in claim 1, wherein the U-profile is present in the further profile with the free edges of the side portions facing downwards, and that on each shaft, a further roller is present, wherein in the side portions of the U-profile vertical slots are present through which the shafts are stabbing, and wherein the rollers are present near the outer side of the side portions of the profile, and a support plate is present under the shafts on which the shafts rest, and the lifting mechanism is located under the support plate, wherein in the main portion of the U-profile a further slot is present which connects the two side slots with each other, and a top plate is present on the U-profile. By applying a U-profile in a convenient manner for fixing the shafts in the direction of transport and for guiding the shafts in height, and by resting the shafts together on a vertically movable support plate, a structure with low build-in height is obtained.

The lifting mechanism is preferably designed such that it can move the shafts between a lower position in which the rollers do not project above the upper plate and an upper position in which the rollers protrude above the top plate.

A favorable embodiment of the roller conveyor is characterized in that the lifting mechanism comprises an inflatable flexible hose which is present under the support plate.

A further favorable embodiment of the roller conveyor is characterized in that the shafts are locked up in the axial direction with a small clearance between the side walls of the further profile. This avoids the rollers to run off the shafts and thus the rollers do not need to be fixed on the shafts.

### Brief description of the drawings

Below, the invention will be elucidated on the basis of an exemplary embodiment shown in the drawings of the roller conveyor according to the invention. In these drawings:
Figure 1 shows an embodiment of the roller conveyor according to the invention with the rollers in the lowered position;
Figure 2 shows the roller conveyor shown in Figure 1 with the rollers is in a raised position; and
Figure 3 shows the U-profile of the roller conveyor shown in Figure 1.

### Detailed description of the drawings

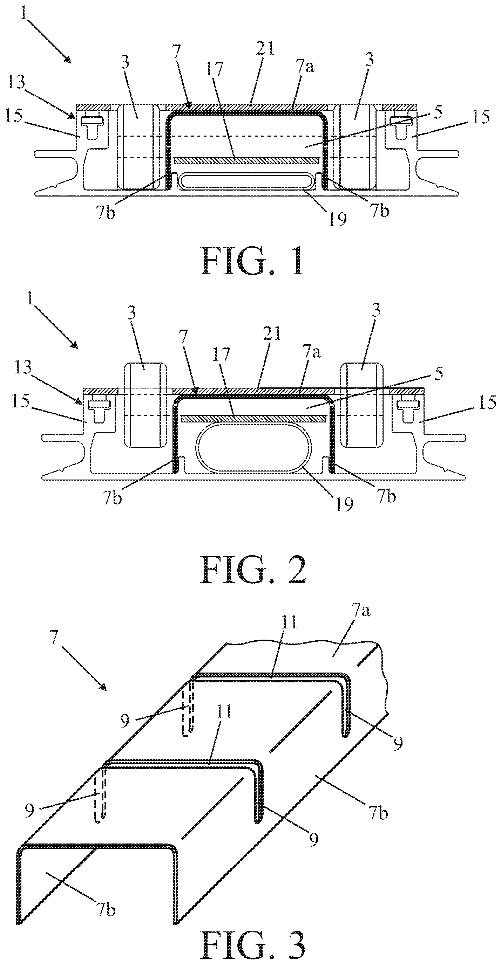

In Figures 1 and 2 an embodiment of the roller conveyor according to the invention is shown with the rollers in the lowered respectively raised position. The roller conveyor 1 has a number of pairs of rollers present in a path, of each pair both rollers 3 are present on a common shaft 5. This shaft is fixed in a U-shaped profile 7 in the direction of transport. For this purpose, the side portions 7b of the U-profile are provided with vertical slots 9, see Fig 3, and in the main portion 7a of the U-profile a further slot 11 is present which connects the two side slots with one another. The shaft protrudes with both ends through the slots present in the side portions 9. The rollers are located on the ends of the shaft and are present near the outer side of the side portions of the U-profile.

The U-profile 7 is present in a further profile 13 which is open at the top, see Figures 1 and 2. This further profile has two side walls 15. The U-profile 7 is present in the further profile 13 with the free edges of the side portions 7b facing downwards. The shafts 5 is locked in the axial direction with a small clearance between the upper parts of the side walls 15 of the further profile.

Under the shafts 5 a support plate 17 is present on which the shafts rest. Under this support plate a lifting mechanism for lifting the shafts is present. This lifting mechanism has an inflatable flexible hose 19 which is present under the support plate. Moreover, on the U-profile 7 a top plate 21 is present which is attached to the further profile 13.

The lifting mechanism can move the shafts 5 between a lower position, see figure 1, in which the rollers 3 do not protrude above the upper plate 21, and an upper position, as shown in Figure 2, in which the rollers 3 do protrude above the top plate 21.

## Claims

1. Roller conveyor (1) comprising a U-profile (7) with shafts (5) at a mutual distance from each other and fixed in the direction of transport, each of which bearing at least one roll (3), as well as a lifting mechanism which is present under the U-profile for the lifting of the shafts, which roller conveyor further comprises a further profile (13) which is open at the top and in which the U-profile (7) is present, said further profile having two side walls (15), wherein the U-profile (7) is present in the further profile (13) with the free edges of the side portions (7b) facing downwards, and that on each shaft, a further roller is present, wherein in the side portions (7b) of the U-profile vertical slots (9) are present through which the shafts are stabbing, and wherein the rollers are present near the outer side of the side portions of the profile, and a support plate (17) is present under the shafts on which the shafts rest, and the lifting mechanism is located under the support plate,
**characterized in that** an upper plate (21) is attached on the two side walls (15) of the further profile (13), **in that** the main portion (7a) of the U-profile has a further slot (11) which connects the two side slots (9) with each other, and **in that** the top plate (21) is present on the U-profile.

2. Roller conveyor (1) as claimed in claim 1, **characterized in that** the lifting mechanism may move between a lower position in which the rollers (3) do not project above the upper plate (21) and an upper position in which the rollers or the shafts (5) protrude above the top plate.

3. Roller conveyor (1) as claimed in claim 1 or 2, **characterized in that** the lifting mechanism is an inflatable flexible hose (19) which is present under the support plate (17).

4. Roller conveyor (1) as claimed in claim 1, 2 or 3, **characterized in that** the shafts (5) are locked up in the axial direction with a small clearance between the side walls (15) of the further profile (13).

## Patentansprüche

1. Rollenbahn (1), bestehend aus einem U-Profil (7) und darin in gegenseitigem Abstand voneinander in Transportrichtung fixierte Achsen (5), von denen jede mindestens eine Rolle (3) trägt, sowie ein Hebemechanismus, der sich unter dem U-Profil zum Anheben der Achsen befindet, welche Rollenbahn ferner ein weiteres Profil (13) enthält, das an der Oberseite offen ist und in dem sich das U-Profil (7) befindet, welches Profil weiter zwei Seitenwände (15) hat, wobei das U-Profil (7) mit den freien Seiten der Seitenteile (7b) nach unten gerichtet sich in dem weiteren Profil (13) befindet, und sich auf jeder Achse eine weitere Rolle befindet, wobei sich in den Seitenteilen (7b) des U-Profils vertikale Nuten (9) befinden, in welchen die Achsen stecken, und wobei sich die Rollen neben der Außenseite der Seitenteile befinden, und sich unter den Achsen eine Tragplatte (17) befindet, auf der die Achsen ruhen und sich der Hebemechanismus unter der Tragplatte befindet, **dadurch gekennzeichnet, dass** eine Deckplatte (21) an den beiden Seitenwänden (15) des weiteren Profils (13) befestigt ist, dass im Kopfteil (7a) des U-Profils eine weitere Nut (11) vorhanden ist, die die beiden Seitennuten (9) miteinander verbindet, und dass die Deckplatte (21) sich auf dem U-Profil befindet.

2. Rollenbahn (1) nach Anspruch 1, **dadurch gekennzeichnet, dass** der Hebemechanismus die Achsen (5) versetzen kann zwischen einer unteren Position, in der die Rollen (3) nicht über die Deckplatte (21) herausragen und einer oberen Position, in der die Rollen über die Deckplatte herausragen.

3. Rollenbahn (1) nach Anspruch 1 oder 2, **dadurch gekennzeichnet, dass** der Hebemechanismus einen aufblasbaren flexiblen Schlauch (19) enthält, der sich unter der Tragplatte (17) befindet.

4. Rollenbahn (1) nach Anspruch 1, 2 oder 3, **dadurch gekennzeichnet, dass** die Achsen (5) in axialer Richtung mit geringem Spiel zwischen den Seitenwänden (15) des weiteren Profils (13) eingeschlossen sind.

## Revendications

1. Chemin de roulement (1) comprenant un profil en U (7) ayant à l'intérieur des axes fixes (5) se trouvant dans la direction de transport et à une distance mutuelle l'un de l'autre, axes qui chacun porte au moins un rouleau (3), ainsi qu'un mécanisme de levage se trouvant sous le profil en U pour soulever les axes, lequel chemin de roulement comprend de plus un profil supplémentaire (13) étant ouvert sur le dessus et dans lequel se trouve le profil en U (7), lequel profil supplémentaire a deux parois latérales (15), où le profil en U (7) se trouve dans le profil supplémentaire (13) et a les bords libres de ses parties latérales (7b) orientés vers le bas, et sur chaque axe se trouvant un rouleau supplémentaire, où dans les parties latérales (7b) du profil en U se trouvent des rainures verticales (9) dans lesquelles les axes sont insérés, et où les rouleaux se trouvent près de la face externe des parties latérales du profil, et sous les axes se trouvant une plaque de support (17) sur laquelle reposent les axes et le mécanisme de levage se trouvant sous la plaque de support, **caractérisé en ce qu'**une plaque supérieure (21) est fixée sur les deux parois latérales (15) du profil supplémentaire (13), **en ce que** dans la partie principale (7a) du profil en U se trouve une rainure supplémentaire (11) qui relie les deux rainures latérales (9) ensemble, et **en ce que** la plaque supérieure (21) se trouve sur le profil en U.

2. Chemin de roulement (1) selon la revendication 1, **caractérisé en ce que** le mécanisme de levage peut déplacer les axes (5) entre une position inférieure dans laquelle les rouleaux (3) ne dépassent pas de la plaque supérieure (21) et une position supérieure où les rouleaux dépassent de la plaque supérieure.

3. Chemin de roulement (1) selon la revendication 1 ou 2, **caractérisé en ce que** le mécanisme de levage comprend un tuyau flexible gonflable (19) se trouvant sous la plaque de support (17).

4. Chemin de roulement (1) selon la revendication 1, 2 ou 3, **caractérisé en ce que** les axes (5) sont enfermés entre les parois latérales (15) du profil supplémentaire (13) avec un jeu minime en direction axiale.
